# EUROPÄISCHE PATENTSCHRIFT

(11) **EP 0 654 371 B1**
(45) Veröffentlichungstag und Bekanntmachung des Hinweises auf die Patenterteilung: **12.03.1997**
(21) Anmeldenummer: 94117940.0
(22) Anmeldetag: 14.11.1994
(51) Int. Cl.: B60J 10/06, B60J 10/08

(54) **Anordnung zum gleichzeitigen Abdichten einer Türscheibe und der Türöffnung an einem Kraftfahrzeug**
Arrangement for simultaneous sealing of the door pane and the door opening of an automobile
Dispositif d'étanchéité simultanée de la vitre de porte et de la baie de porte d'une automobile

(30) Priorität: 15.11.1993 DE 4339033
(43) Veröffentlichungstag der Anmeldung: 24.05.1995
(73) Patentinhaber: METZELER Automotive Profiles GmbH, D-88131 Lindau (DE)
(72) Erfinder: Bonné, Andreas, D-88099 Neukirch (DE); Glagow, Klaus, D-88142 Wasserburg (DE); Haas, Michael, D-88279 Amtzell (DE)
(74) Vertreter: Preissner, Nicolaus, Dipl.-Ing.

(56) Entgegenhaltungen:
- EP-A- 0 182 318
- EP-A- 0 322 949
- EP-A- 0 587 428
- DE-A- 3 512 973

## Beschreibung

Die Erfindung bezieht sich auf eine Anordnung zum gleichzeitigen Abdichten einer Türscheibe und der Türöffnung an einem Kraftfahrzeug, mit einem einstückigem Profil aus einem elastomeren Material mit einem auf den Türflansch aufschiebbaren Befestigungsbereich, einem Dichtungsbereich für die Türscheibe und einem Dichtungselement für die Türöffnung zwischen oberer Türkante und Dach.

Eine derartige Anordnung ist aus der EP 0 182 318 B1 bekannt. Dabei weist das einstückige Profil zwei parallele U-förmige Aussparungen auf, die auf zwei parallel zueinander abragende Blechkanten des Türrahmens aufklemmbar sind. Bei dieser Profilgestaltung ist es erforderlich, innerhalb des Profils eine durchgehende Armierung komplizierten Querschnittes vorzusehen und darüberhinaus das Profil noch mit zusätzlichen Befestigungsmitteln am Türflansch festzulegen.

Demgegenüber liegt der vorliegenden Erfindung die Aufgabe zugrunde, eine derartige Anordnung zur Abdichtung von Türscheibe und Türöffnung zu schaffen, die als fertiges Bauelement an den Kraftfahrzeug-Hersteller angeliefert und ohne weitere Hilfsmittel an der Fahrzeugtür montiert werden kann.

Zur Lösung dieser Aufgabe ist erfindungsgemäß vorgesehen, daß der U-förmig ausgebildete und auf einen abragenden Türflansch aufschiebbare Befestigungsbereich mit einem seitlich abragenden Dichtlippenbereich für die Außenseite der Türscheibe auf seiner gesamten Außenseite von einer Leiste aus starrem Material überdeckt ist, die zwei im angenähert rechten Winkel nach innen abragende Stege aufweist, die angenähert parallel zum abragenden Türflansch verlaufen und in zwei nach außen offene Schlitze in den Schenkeln des U-förmigen Befestigungsbereiches einklipsbar sind.

Mit einer solchen Leiste entsprechender Gestaltung, die aus Aluminium oder Kunststoff bestehen kann, werden einmal die nach außen freiliegenden Gummibereiche des Profiles abgedeckt, was zu einer besseren Optik führt, und zum anderen übernimmt diese Leiste praktisch eine Stabilisierung und Armierung des Profiles und bietet nach dem Aufschieben auf den Türflansch eine sichere Verklammerung des Befestigungsbereiches.

Zur Halterung des aufgeschobenen Profiles ist es dabei zweckmäßig, wenn von einer innenliegenden Seitenwandung des den Türflansch überdeckenden U-förmigen Befestigungsbereiches eine Rastlippe abragt, die in eine Einziehung am freien Ende des Türflansches eingreift.

Diese Einziehung kann auch durch eine umgebördelte Kante des Türflansches gebildet sein.

Bezüglich der weiteren Ausgestaltung des Profiles kann an die Außenkante des scheibenseitigen Schenkels des U-förmigen Befestigungsbereiches der innenliegende Teil des Fensterführungsbereiches anvulkanisiert sein, der aus einem parallel zur Scheibe verlaufenden und sich an einem weiteren Türblechbereich abstützenden Hartgummisteg sowie je einer am oberen und unteren Ende schräg zueinander geneigten Dichtlippe aus Weichgummi besteht, welche Dichtlippen sich an die Innenseite der geschlossenen Scheibe anlegen.

Bezüglich der Abdichtung zum Dach hin ist es zweckmäßig, wenn in der Ebene der Aluminiumleiste am dachseitigen Schenkel des U-förmigen Befestigungsbereiches eine gegen das Dach abdichtende Dichtlippe aus Weichgummi anextrudiert ist, die im Fußbereich mit einem wulstförmigen Ansatz in eine hinterschnittene Nut seitlich an einem Steg der Aluminiumleiste einrastet.

Es ist aber auch möglich, daß in der Ebene der Leiste am dachseitigen Schenkel des U-förmigen Befestigungsbereiches eine gegen die Dachkante abdichtende Dichtlippe anextrudiert ist, in dessem Fußbereich eine von der Leiste abragende Rastnoppe eingreift.

Bezüglich des verwendeten Materials ist es vorteilhaft, wenn der U-förmige Befestigungsbereich mit dem seitlich abragenden Haltebereich für die anextrudierte Dichtlippe aus Hartgummi besteht.

In Weiterbildung der Erfindung ist es darüberhinaus noch möglich, daß der innenliegende Teil des Fensterführungsbereiches am unteren Ende einen sich parallel zur Scheibe erstreckenden Einklemmschutz in Form eines angesetzten Hohlprofils mit leitenden Gummibereichen auf gegenüberliegenden Seiten des Hohlprofils aufweist.

Eine weitere mögliche Gestaltung des Profils besteht darin, daß die Leiste aus starrem Material unmittelbar auf den abragenden Türflansch aufgeschoben ist und im oberen Steg eine Aufnahmenut für eine Dichtlippe zur Dachkante aufweist und mit dem unteren Stegbereich, der zwei vertikale Ansätze aufweist, das eigentliche Fensterführungsprofil aus elastomerem Material einschließt.

Dabei kann die Dichtlippe als Hohlkammerprofil mit einem Tannenbaumfuß zum Einrasten in die Aufnahmenut ausgebildet sein.

Zur sicheren Halterung des Fensterführungsprofils ist es zweckmäßig, wenn der außenliegende Leistenbereich einen nach innen ragenden Ansatz aufweist, der in eine entsprechende Ausnehmung des Fensterführungsprofils eingreift.

Bei einem Verfahren zur Konfektionierung und Montage einer entsprechenden Anordnung ist erfindungsgemäß vorgesehen, daß das Profil, bestehend aus dem Dichtungsbereich zum Dach, dem U-förmigen Befestigungsbereich und dem Fensterführungsbereich, einstückig aus einem Elastomer mit Bereichen unterschiedlicher Härte extrudiert wird, die Leiste aus starrem Material mit den beiden abragenden Stegen in das Profil eingeklipst und das so komplettierte Profil auf den Türflansch bis zum Einrasten der Rastlippe im Türflansch aufgeschoben wird.

Anhand einer schematischen Zeichnung sind Aufbau und Funktionsweise eines Ausführungsbeispiels nach der Erfindung näher erläutert. Dabei zeigen:
- Fig.1: eine Gesamtanordnung im komplettierten Zustand,
- Fig 2.: diese Gesamtanordnung im auseinandergezogenen Zustand mit Dichtungsprofil, starrer Leiste und Türblech,
- Fig. 3: einen Querschnitt durch eine abgewandelte Ausgestaltung eines solchen Profils und
- Fig. 4: eine weitere Variante einer solchen Anordnung.

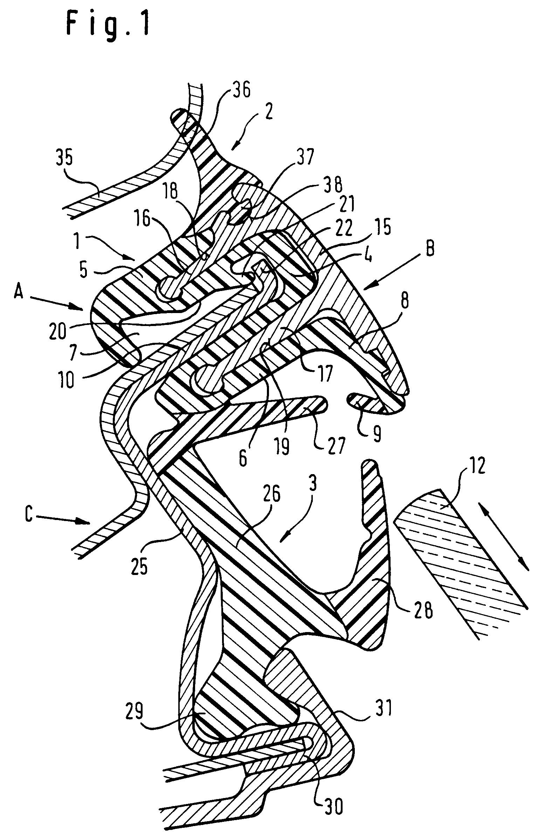

Wie man aus Fig. 1 erkennt, besteht die komplettierte Gesamtanordnung aus dem eigentlichen Elastomerprofil A und der starren Leiste B, die auf das Türblech C aufgeschoben sind.

Das Elastomerprofil A weist zunächst einen U-förmigen Klemmbereich 1 aus Hartgummi auf, der schräg nach unten schraffiert ist und besteht aus den beiden von der Basis 4 abragenden Schenkel 5 und 6, die einen Spalt 7 zur Aufnahme des Türflansches 10 begrenzen. Vom oberen Ende des Schenkels 6 ragt seitlich noch ein Haltebereich 8 für eine nach innen ragende Dichtlippe 9 ab, die außen an der geschlossenen Scheibe 12 anliegt.

Die Außenseite dieses U-förmigen Klemmbereiches 1 ist von einer starren Leiste B überdeckt, die aus Aluminium oder Kunststoff bestehen kann und die einen flachen Basisbereich 15 und zwei vertikal nach innen abragende Stege 16 und 17 aufweist, die parallel zum abragenden Türflansch 10 verlaufen und in zwei parallele, nach außen offene Schlitze 18 und 19 in den Schenkeln 5 und 6 des U-förmigen Befestigungsbereiches 1 eingeklipst sind.

Von einer innenliegenden Seitenwandung 20 des Schlitzes 7 ragt schräg nach oben noch eine Rastlippe 21 ab, die eine umgebördelte Kante 22 am freien Ende des Türflansches 10 hintergreift.

An der Außenkante des scheibenseitigen Schenkels 6 des U-förmigen Befestigungsbereiches 1 ist dann der innenliegende Teil des Fensterführungsbereiches 3 anextrudiert. Dieser Fensterführungsbereich 3 besteht aus einem sich entlang des Türblechbereiches 25 und parallel zur Scheibe 12 erstreckenden Hartgummisteg 26, an dessem oberen Ende eine nach innen ragende Dichtlippe 27 und an dessem unteren Ende eine weitere Dichtlippe 28 - beide aus Weichgummi- anextrudiert sind, die an der Innenseite der Scheibe 12 in deren geschlossenem Zustand anliegen. Das untere Ende des Steges 26 weist noch einen seitlichen Fuß 29 auf, der von einem weiteren Türflansch 30 umgriffen und von einem Kunststoff-Klemmprofil 31 verklemmt ist.

In der Ebene der Leiste 15 ist am dachseitigen Schenkel 5 des U-förmigen Befestigungsbereiches der Abdichtbereich 2 zum Dach 35 hin vorgesehen, der aus einer an den Schenkel 5 anextrudierten Dichtlippe 36 aus Weichgummi besteht. Diese Dichtlippe 36 weist in ihrem Fußbereich einen wulstförmigen Ansatz 37 auf, der in eine hinterschnittene Nut 38 seitlich am Steg 16 der Leiste 15 einrasten kann.

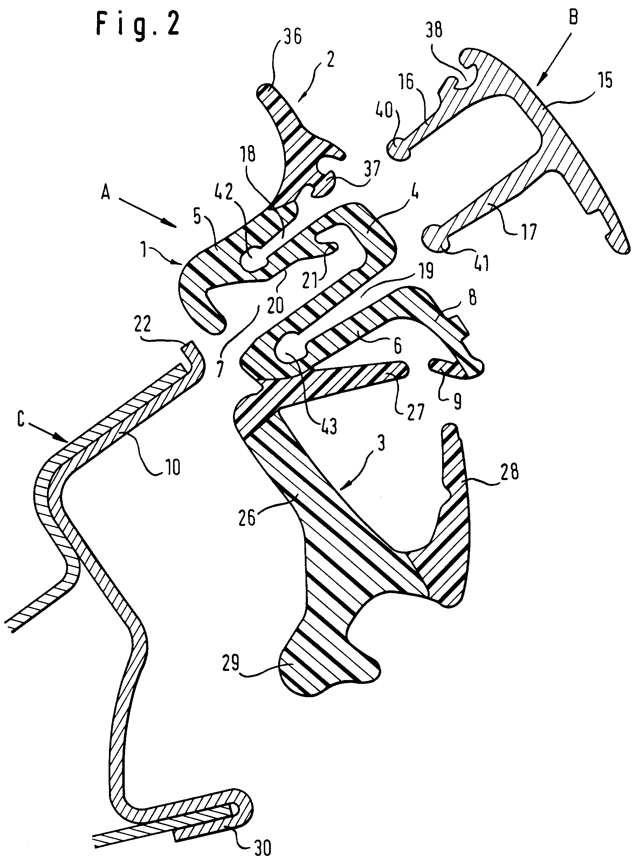

In Fig. 2 ist noch einmal die Gesamtanordnung im auseinandergezogenen Zustand mit dem Profil A, der Leiste B und dem Türblech C gezeigt.

Vom Profil A erkennt man deutlich den U-förmigen Klemmbereich 1, den Abdichtbereich 2 zum Dach und den Fensterführungsbereich 3. Dieses Profil A weist enstprechend der dargestellten Schraffierung Gummi unterschiedlicher Härte auf, wobei die schräg nach unten schraffierten Bereiche aus Hartgummi und die schräg nach oben schraffierten Bereiche aus Weichgummi bestehen.

Wenn nun die Aluminiumleiste B mit ihren Stegen 16 und 17 in die entsprechenden Schlitze 18 und 19 der Schenkel 5 und 6 des Klemmbereiches 1 eingeschoben und mit ihren verdickten Enden 40 und 41 in den Ausnehmungen 42 und 43 eingerastet ist, ist damit einmal die freiliegende Außenseite des Gummiprofiles im Bereich des Befestigungsbereiches 1 und des Ansatzes 8 voll vom Basisbereich 15 der Aluminiumleiste B abgedeckt. Darüberhinaus bewirken die Stege 16 und 17 eine Versteifung und Kommplettierung des Profiles A und ermöglichen eine einfachere Montage.

Das Profil A wird dann mit der aufgesetzten Aluminiumleiste B auf den Flansch 10 des Türbleches C aufgeschoben und zwar soweit, bis die Rastlippe 21 hinter der umgebördelten Kante 22 des Flansches 10 einrastet. Anschließend wird noch -wie aus Fig. 1 ersichtlich- der unten liegende Fuß 29 des Fensterführungsbereiches 3 mit dem Kunststoffprofil 31 arretiert und gegen den Flansch 30 verspannt.

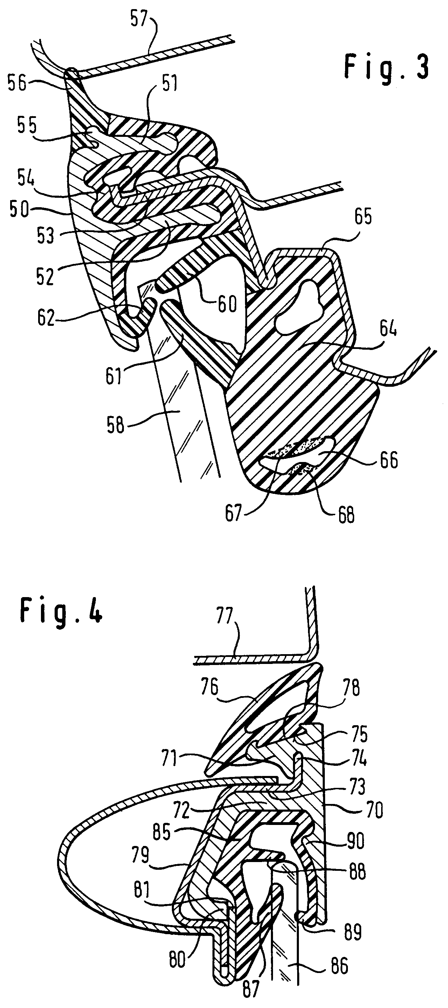

Bei dem Ausführungsbeispiel nach Fig. 3 ist ebenfalls eine starre, außenliegende Leiste 50 aus Aluminium oder Kunststoff vorgesehen, die mit ihren beiden abragenden Stegen 51 und 52 in den den abragenden Türflansch 53 umgebenden Befestigungsbereich 54 des Profils eingreift. Hierbei weist der obere Steg 51 der Leiste 50 eine nach oben abragende Rastnoppe 55 auf, die in eine entsprechende Ausnehmung der Dichtlippe 56 eingreift, die den Türspalt zur Dachkante 57 hin abdichtet.

Der vom unteren Bereich der Leiste 50 umschlossene Fensterführungsbereich mit den drei zur Scheibe 58 hin abragenden Dichtlippen 60, 61 und 62 wird auf der Innenseite von einem Profilbereich 64 gehalten, der in einer entsprechenden Hinterschneidung 65 des Türbleches gehaltert ist.

Am unteren Ende dieses Profilbereiches 64 ist parallel zur Scheibe 58 ein als Einklemmschutz dienendes Hohlprofil 66 angesetzt, das auf gegenüberliegenden Seiten zwei Bereiche 67 und 68 aus leitfähigem Gummi aufweist, die bei einem Zusammenpressen des Hohlprofils 66 in Kontakt kommen und ein Stop- oder Umsteuersignal an einen entsprechenden elektrischen Fensterheber abgeben.

Bei dem Ausführungsbeispiel nach Fig. 4 ist eine etwas abweichende Konstruktion - jedoch nach dem gleichen Grundprinzip - gewählt. Hierbei ist die starre Leiste 70 aus Aluminium oder Kunststoff mit ihren nach hinten abragenden Stegen 71 und 72 unmittelbar auf den abragenden Türflansch 73 bzw. auf eine umgebogene Kante 74 aufgesetzt.

Der obere Steg 71 ist mit einer hinterschnittenen Nut 75 versehen, in die das als Hohlprofil ausgebildete Dichtungsprofil 76 zur Abdichtung des Türspaltes zur Dachkante 77 mit einem Tannenbaumfuß 78 eingesetzt ist. Zweckmäßigerweise besteht dieses Dichtungsprofil 76 aus Moosgummi.

Der untere, nach hinten abragende Steg 72 ist entlang des Türbleches 79 nach unten abgewinkelt und mit seinem freien Ende 80 gegen einen Ansatz 81 des Türbleches 79 arretiert. Damit bilden der untere Bereich des Steges 72 und der untere Bereich der Leiste 70 in etwa ein nach unten offenes U, in das das eigentliche Fensterführungsprofil 85 mit den drei, nach innen zur Scheibe 86 abragenden Dichtlippen 87, 88 und 89 eingesetzt ist.

Zur besseren Verklammerung weist dabei die Leiste 70 einen nach innen ragenden Ansatz 90 auf, der in eine entsprechende Einbuchtung des Fensterführungsprofils 85 eingreift und damit dessen Herausrutschen verhindert.

Insgesamt ist damit eine stabilisierte Anordnung zur gleichzeitigen Abdichtung einer Türscheibe und der Tür-Öffnung zum Dach hin gegeben, die im komplettierten Zustand angeliefert und durch einfaches Aufklipsen ohne weitere Hilfsmittel an der Tür befestigt werden kann. Darüberhinaus ist durch eine fehlende feste Verbindung der Aluminium- oder Kunststoffleiste zum eigentlichen Gummiprofil ein leichtes Lösen beider Teile und ein Recyclen leicht möglich, da die Leiste nur eingeclipst ist.

## Patentansprüche

1. Anordnung zum gleichzeitigen Abdichten einer Türscheibe (12) und der Türöffnung an einem Kraftfahrzeug, mit einem einstückigen Profil (A) aus einem elastomeren Material mit einem auf den Türflansch (10) aufschiebbaren Befestigungsbereich (1), einem Dichtungsbereich (3) für die Türscheibe (12) und einem Dichtungselement (2) zwischen dem Bereich zwischen oberer Türkante und Dach (35), dadurch gekennzeichnet, daß der U-förmig ausgebildete und auf einen abragenden Türflansch (10; 53; 73) aufschiebbare Befestigungsbereich (1; 54) mit einem seitlich abragenden Dichtlippenbereich (8; 60) für die Außenseite der Türscheibe (12; 58; 86) auf seiner gesamten Außenseite von einer Leiste (B) aus starrem Material überdeckt ist, die zwei im angenähert rechten Winkel nach innen abragende Stege (16, 17; 51, 52; 71, 72) aufweist, die angenähert parallel zum abragenden Türflansch (10; 53; 73) verlaufen, und in zwei nach außen offene Schlitze (18, 19) in den Schenkeln (5, 6) des U-förmigen Befestigungsbereiches (1; 54) einklipsbar sind.

2. Anordnung nach Anspruch 1, dadurch gekennzeichnet, daß die Leiste (15; 50; 70) aus Aluminium besteht.

3. Anordnung nach Anspruch 1, dadurch gekennzeichnet, daß die Leiste (15; 50; 70) aus starrem Kunststoff besteht.

4. Anordnung nach Anspruch 1, dadurch gekennzeichnet, daß von einer innenliegenden Seitenwandung (20) des den Türflansch (10, 53) überdeckenden U-förmigen Befestigungsbereiches (1; 54) eine Rastlippe (71; 79) abragt, die in einer Einziehung (22) am freien Ende des Türflansches (10; 53) eingreift.

5. Anordnung nach Anspruch 4, dadurch gekennzeichnet, daß die Einziehung durch eine umgebördelte Kante (22) des Türflansches (10) gebildet ist.

6. Anordnung nach Anspruch 1, dadurch gekennzeichnet, daß an die Außenkante des scheibenseitigen Schenkels (6) des U-förmigen Befestigungsbereiches (1; 54) der innenliegende Teil des Fensterführungsbereiches (3; 64) anextrudiert ist, der aus einem parallel zur Scheibe (12; 58) verlaufenden und sich an einem weiteren Türblechbereich (25; 65) abstützenden Hartgummisteg (26; 64) sowie je einer am oberen und unteren Ende angeordneten, schräg zueinander geneigten Dichtlippe (27, 28; 60, 61) aus Weichgummi besteht, welche Dichtlippen sich an die Innenseite der geschlossenen Scheibe (12; 58) anlegen.

7. Anordnung nach Anspruch 1, dadurch gekennzeichnet, daß in der Ebene der Leiste (15) am dachseitigen Schenkel (5) des U-förmigen Befestigungsbereiches (1) eine gegen das Dach (35) abdichtende Dichtlippe (36) anextrudiert ist, die im Fußbereich mit einem wulstförmigen Ansatz (37) in eine hinterschnittene Nut (38) seitlich an einem Steg (16) der Leiste (15) einrastet.

8. Anordnung nach Anspruch 1, dadurch gekennzeichnet, daß in der Ebene der Leiste (50) am dachseitigen Schenkel des U-förmigen Befestigungsbereiches (54) eine gegen die Dachkante (57) abdichtende Dichtlippe (56) anextrudiert ist, in dessen Fußbereich eine von der Leiste abragende Rastnoppe (55) eingreift.

9. Anordnung nach Anspruch 1, dadurch gekennzeichnet, daß der U-förmige Befestigungsbereich (1) mit dem seitlich abragenden Haltebereich (8) für die Weichgummi-Dichtlippe (9) aus Hartgummi besteht.

10. Anordnung nach Anspruch 6, dadurch gekennzeichnet, daß der innenliegende Teil (64) des Fensterführungsbereiches am unteren Ende einen sich parallel zur Scheibe erstreckenden Einklemmschutz in Form eines Hohlprofils (66) mit leitenden Gummibereichen (67, 68) auf gegenüberliegenden Seiten des Hohlprofils (66) aufweist.

11. Anordnung nach Anspruch 1, dadurch gekennzeichnet, daß die Leiste (70) aus starrem Material unmittelbar auf den abragenden Türflansch (73) aufgeschoben ist und im oberen Steg (71) eine Aufnahmenut (74) für eine Dichtlippe (76) zur Dachkante (77) aufweist und mit dem unteren Stegbereich (72), der zwei vertikale Ansätze aufweist, das eigentliche Fensterführungsprofil (85) aus elastomerem Material umschließt.

12. Anordnung nach Anspruch 11, dadurch gekennzeichnet, daß die Dichtlippe (76) als Hohlkammerprofil mit einem Tannenbaumfuß (78) zum Einrasten in die Aufnahmenut (75) ausgebildet ist.

13. Anordnung nach Anspruch 11, dadurch gekennzeichnet, daß der außenliegende Leistenbereich (70) einen nach innen ragenden Ansatz (90) aufweist, der in eine entsprechende Ausnehmung des Fensterführungsprofils (85) eingreift.

14. Verfahren zur Konfektionierung und Montage einer Anordnung nach einem oder mehreren der Ansprüche 1 bis 13, dadurch gekennzeichnet, daß das Profil, bestehend aus Dichtungsbereich zum Dach, U-förmigem Befestigungsbereich und Fensterführungsbereich, einstückig aus einem Elastomer mit Bereichen unterschiedlicher Härte extrudiert, die Leiste aus starrem Material mit den beiden abragenden Stegen in das Profil eingeklipst und das so komplettierte Profil auf den Türflansch bis zum Einrasten der Rastlippe hinter der Türflanschkante aufgeschoben wird.

## Claims

1. An arrangement for simultaneous sealing of the door pane (12) and the door opening of an automobile, comprising an integral profile (A) of an elastomer material including a fastening portion (1) mountable on the door flange (10), a sealing portion (3) for said door pane (12) and a sealing element (2) for said door opening between upper door edge and roof characterized in that said channel-sectioned configured fastening portion (1; 54) mountable onto a downswept door flange (10; 53; 73) is covered by a laterally downswept sealing lip portion (8; 60) for the outer side of said door pane (12; 58; 86) on its full outer side by a strip (B) of rigid material which comprises two webs (16, 17; 51, 52; 71, 72) downswept inwardly at an approximate right angle which are oriented approximately parallel to said downswept door flange (10; 53; 73) and which can be clipped into place in two outwardly open slots (18, 19) in the legs (5, 6) of said channel-section fastening portion (1; 54).

2. The arrangement as set forth in claim 1, characterized in that
said strip (15; 50; 70) is made of aluminum.

3. The arrangement as set forth in claim 1, characterized in that said strip (15; 50; 70) is made of a rigid plastics material.

4. The arrangement as set forth in claim 1, characterized in that a latching lip (71; 79) is provided downswept from an inside sidewall (20) of said channel-section fastening portion (1; 54) covering said door flange (10, 53), said latching lip engaging an in-turn (22) at the free end of said door flange (10; 53).

5. The arrangement as set forth in claim 4, characterized in that said in-turn is formed by a flanged edge (22) of said door flange (10).

6. The arrangement as set forth in claim 1, characterized in that the inside part of said window guide portion (3; 64) is extruded in place on the outer edge of the pane-side leg (6) of said channel-section fastening portion (1; 54), said part comprising an ebonite web (26; 64) oriented parallel to said pane (12; 58) and supported by a further portion of said door panel (25; 65) and a sealing lip (27, 28; 60, 61) of soft rubber located one each at the top and bottom end inclined to each other, said sealing lips contacting the inside of the closed pane (12; 58).

7. The arrangement as set forth in claim 1, characterized in that in the plane of said strip (15) at the roof-side leg (5) of said channel-section fastening portion (1) a sealing lip (36) is extruded in place to seal off said roof (35), this sealing lip latching into place in the footing portion by a bead-shaped protuberance (37) into a relieved groove (38) to the side of a web (16) of said strip (15).

8. The arrangement as set forth in claim 1, characterized in that in the plane of said strip (50) on the roof-side leg of said channel-section fastening portion (54) a sealing lip (56) is extruded into place to seal off said roof edge (57), a latching protuberance (55) downswept from said strip engaging the footing portion of said sealing lip.

9. The arrangement as set forth in claim 1, characterized in that
said channel-section fastening portion (1) having the laterally downswept holding portion (8) for said soft rubber sealing lip (9) is made of ebonite.

10. The arrangement as set forth in claim 6, characterized in that said inside part (64) of said window guide portion comprises at the lower end a finger guard extending parallel to the pane in the form of a hollow profile (66) having guiding rubber portions (67, 68) on opposing sides of said hollow profile (66).

11. The arrangement as set forth in claim 1, characterized in that said strip (70) of rigid material is mounted directly on said downswept door flange (73), said strip featuring in the upper web (71) a groove (74) for receiving a sealing lip (76) to seal off said roof edge (77) and which together with the lower web portion (72) including two vertical raised faces encloses the actual window guide profile (85) of an elastomer material.

12. The arrangement as set forth in claim 11, characterized in that said sealing lip (76) is configured as a hollow chambered profile having a fir-tree footing (78) for latching in place in said receiving groove (75).

13. The arrangement as set forth in claim 11, characterized in that the outside strip portion (70) includes a raised face (90) protruding inwardly which engages a corresponding recess in said window guide profile (85).

14. A method fabricating and fitting an arrangement as set forth in any of the claims 1 to 13 characterized in that the profile, consisting of the roof-side sealing portion, the channel-section fastening portion and the window guide portion is extruded in one piece from an elastomer having portions of differing hardness, said strip of a rigid material being clipped into place by its two downswept webs in said profile and the thereby finish-assembled profile being mounted on said door flange so that said latching lip latches behind the door flange edge.

## Revendications

1. Dispositif d'étanchéité simultanée de la vitre de porte (12) et de la baie de porte d'une automobile, comportant un profilé (A) en une seule pièce en matériau élastomère présentant une région de fixation (1) enfichable sur la bride de porte (10), une région d'étanchement (3) pour la vitre de porte (12) et un élément d'étanchéité (2) dans la région entre l'arête de porte supérieure et le toit (35), caractérisé en ce que la région de fixation (1 ; 54), réalisée en forme de U et enfichable sur une bride de porte en saillie (10 ; 53 ; 73) et comportant une région à lèvres d'étanchéité (8 ; 60) faisant latéralement saillie pour la face extérieure de la vitre de porte (12 ; 58 ; 86), est recouverte sur toute sa face extérieure par une barre (B) en matériau rigide, qui présente deux barrettes (16, 17 ; 51, 52; 71, 72) faisant saillie vers l'intérieur approximativement à angle droit, qui s'étendent approximativement parallèlement à la bride de porte en saillie (10 ; 53 ; 73) et qui peuvent être clipsées dans deux fentes (18, 19) ouvertes vers l'extérieur dans les bras (5, 6) de la région de fixation (1; 54) en forme de U.

2. Dispositif selon la revendication 1, caractérisé en ce que la barre (15; 50; 70) est en aluminium.

3. Dispositif selon la revendication 1, caractérisé en ce que la barre (15 ; 50 ; 70) est en une matière plastique rigide.

4. Dispositif selon la revendication 1, caractérisée en ce que depuis une paroi latérale intérieure (20) de la région de fixation (1 ; 54) en forme de U recouvrant la bride de porte (10 ; 53) dépasse une lèvre d'enclenchement (71 ; 79) qui s'engage dans un retrait (22) à l'extrémité libre de la bride de porte (10 ; 53).

5. Dispositif selon la revendication 4, caractérisé en ce que le retrait est formé par une arête rabattue (22) de la bride de porte (10).

6. Dispositif selon la revendication 1, caractérisé en ce que sur l'arête extérieure du bras (6) côté vitre de la région de fixation en forme de U (1 ; 54) est extrudée la partie intérieure de la région de guidage de fenêtre (3 ; 64) qui est constituée par une barrette en caoutchouc dur (26 ; 64) s'étendant parallèlement à la vitre (12 ; 58) et s'appuyant contre une autre région de tôle de porte (25 ; 65), ainsi que par des lèvres d'étanchéité (27, 28 ; 60, 61) agencées respectivement à l'extrémité supérieure et à l'extrémité inférieure et s'étendant de façon inclinée en oblique l'une par rapport à l'autre et constituées en caoutchouc souple, ces lèvres d'étanchéité s'appuyant contre la face intérieure de la vitre fermée (12 ; 58).

7. Dispositif selon la revendication 1, caractérisé en ce que dans le plan de la barre (15), sur le bras (5) côté toit de la région de fixation (1) en forme de U, est extrudée une lèvre d'étanchéité (36) assurant l'étanchement vis-à-vis du toit (35), laquelle s'enclenche au niveau de la région de pied par un talon (37) en forme de bourrelet dans une gorge (38) en contre-dépouille latéralement sur une barrette (16) de la barre (15).

8. Dispositif selon la revendication 1, caractérisé en ce que dans le plan de la barre (50), sur le bras côté toit de la région de fixation (54) en forme de U, est extrudée une lèvre d'étanchéité (56) assurant l'étanchement vis-à-vis de l'arête de toit (57), dans la région de pied de laquelle s'engage un téton d'enclenchement (55) faisant saillie depuis la barre.

9. Dispositif selon la revendication 1, caractérisé en ce que la région de fixation (1) en forme de U, comportant la région de retenue (8) faisant saillie latéralement et prévue pour la lèvre d'étanchéité (9) en caoutchouc souple, est constituée en caoutchouc dur.

10. Dispositif selon la revendication 6, caractérisé en ce que la partie intérieure (64) de la région de guidage de fenêtre présente à l'extrémité inférieure un dispositif protecteur anti-coincement s'étendant parallèlement à la vitre sous forme d'un profilé creux (66) comportant des régions en caoutchouc conductrices (67, 68) sur des côtés opposés du profilé creux (66).

11. Dispositif selon la revendication 1, caractérisé en ce que la barre (70) en matériau rigide est enfichée directement sur la bride de porte en saillie (73) et présente dans la barrette supérieure (71) une gorge de réception (74) prévue pour une lèvre d'étanchéité (76) vis-à-vis de l'arête de toit (77), et en ce que, par la région de barrette inférieure (72) qui présente deux talons verticaux, cette barre entoure le profilé de guidage de fenêtre (85) lui-même en matériau élastomère.

12. Dispositif selon la revendication 11, caractérisé en ce que la lèvre d'étanchéité (76) est réalisée sous forme de profilé à chambre creuse comportant un pied en forme de champignon (78) pour l'enclenchement dans la gorge de réception (75).

13. Dispositif selon la revendication 11, caractérisé en ce que la région de barre extérieure (70) présente un talon (90) en saillie vers l'intérieur, qui s'engage dans un évidement correspondant du profilé de guidage de fenêtre (85).

14. Procédé pour confectionner et monter un dispositif selon l'une ou plusieurs des revendications 1 à 13, caractérisé en ce que le profilé, qui est constitué par la région d'étanchement vis-à-vis du toit, par la région de fixation en forme de U et par la région de guidage de fenêtre, est extrudé en une seule pièce en matériau élastomère présentant des régions de différentes duretés, en ce que la barre en matériau rigide est clipsée par les deux barrettes en saillie dans le profilé, et en ce que le profilé ainsi complété est enfiché sur la bride de porte jusqu'à enclenchement de la lèvre d'enclenchement derrière l'arête de bride de porte.
